# DEMANDE DE BREVET EUROPEEN

(11) **EP 4 850 580 A1**
(43) Date de publication de la demande: **09.12.2026**
(21) Numéro de dépôt: 26182169.8
(22) Date de dépôt: 01.06.2026
(51) Int. Cl.: A47J 37/06, A47J 27/08

(54) **APPAREIL DE CUISSON ELECTRIQUE COMPRENANT UN SYSTEME DE CUISSON A AIR CHAUD ET UN DISPOSITIF DE BARRAGE**

(30) Priorité: 04.06.2025 FR 2505994
(71) Demandeur: SEB S.A., 69130 Ecully (FR)
(72) Inventeur: PETITALLOT, Johann, 69134 ECULLY CEDEX (FR); PRIETO, Guillaume, 69134 ECULLY CEDEX (FR); JAPIOT, Frédéric, 69134 ECULLY CEDEX (FR); SEURAT, Frédéric, 69134 ECULLY CEDEX (FR)
(74) Mandataire: SEB Développement

(57) **Abrégé**

L'invention concerne un appareil de cuisson électrique (1) comprenant un boîtier (2), une cuve de cuisson (4), un couvercle (9) configuré pour occuper une position d'ouverture et une position de fermeture, un système de cuisson à air chaud (10) configuré pour générer un flux d'air chaud sur des aliments reçus dans la cuve de cuisson (4). La cuve de cuisson (4) comporte au moins une poignée de préhension (8) configurée pour faire saillie radialement au-delà du boîtier (2) et l'appareil de cuisson électrique (1) comporte un dispositif de barrage (14) fixé au couvercle (9) et configuré pour empêcher un écoulement du flux d'air chaud, généré par le système de cuisson à air chaud (10), au contact de l'au moins une poignée de préhension (8) lorsque le couvercle (9) est dans la position de fermeture et que l'appareil de cuisson électrique (1) est dans le mode de cuisson à air chaud.

## Description

### Domaine technique

La présente invention concerne de manière générale un appareil de préparation culinaire pour cuire des aliments selon au moins un mode de cuisson à air chaud, tel qu'un autocuiseur électrique.

### Etat de la technique

Il est connu de l'art antérieur d'utiliser un appareil de cuisson électrique comprenant :
- un boîtier comprenant un logement de réception,
- une cuve de cuisson configurée pour être disposée dans le logement de réception et pour recevoir des aliments à cuire,
- un couvercle configuré pour occuper une position d'ouverture dans laquelle le couvercle autorise un accès à la cuve de cuisson, et une position de fermeture dans laquelle le couvercle empêche l'accès à la cuve de cuisson et délimite une chambre de cuisson avec la cuve de cuisson,
- un élément de chauffage configuré pour chauffer la cuve de cuisson,
- un système de cuisson à air chaud configuré pour générer un flux d'air chaud sur des aliments reçus dans la cuve de cuisson, le système de cuisson à air chaud comprenant un ventilateur relié mécaniquement au couvercle et configuré pour générer un flux d'air sur des aliments reçus dans la cuve de cuisson, une unité d'entraînement configurée pour entraîner en rotation le ventilateur autour d'un axe de rotation, et un dispositif de chauffage relié mécaniquement au couvercle et configuré pour chauffer le flux d'air généré par le ventilateur,
- une unité de commande configurée pour commander le fonctionnement de l'appareil de cuisson électrique selon au moins un mode de cuisson conductif et un mode de cuisson à air chaud.

Ce type d'appareil de cuisson électrique est particulièrement performant car il permet à un utilisateur de réaliser la cuisson d'aliments à cuire dans la cuve de cuisson selon plusieurs modes de cuisson différents, à savoir un mode de cuisson à air chaud dans lequel un flux air chaud est généré par la rotation du ventilateur simultanément au fonctionnement du dispositif de chauffage, et un mode de cuisson conductif dans lequel la chambre de cuisson délimite un espace fermé étanche.

Cependant, un inconvénient d'un tel appareil de cuisson électrique réside dans la difficulté, pour un utilisateur, de réaliser la préhension de la cuve de cuisson notamment en vue de l'extraire hors du boîtier, de transférer son contenu dans un plat ou similaire, ou encore de la transporter pour réaliser le service à table par exemple.

Il existe dans l'art antérieur des appareils de cuisson électrique aptes à permettre la cuisson d'aliments selon un mode de cuisson sous pression et dont la cuve de cuisson est équipée d'une ou plusieurs poignées de cuve afin de faciliter le retrait de la cuve de cuisson hors du boîtier.

Néanmoins, si un appareil de cuisson électrique, apte à fonctionner selon un mode de cuisson sous pression et un mode de cuisson à air chaud et donc équipé d'un système de cuisson à air chaud, était modifié pour être équipé d'un ou de plusieurs poignées de cuve, le flux d'air chaud généré par le système de cuisson à air chaud serait susceptible de s'écouler en partie sur la ou chaque poignée de cuve, de telle sorte qu'un utilisateur serait susceptible de se brûler en manipulant la ou les poignées de cuve après un cycle de cuisson d'aliments selon le mode de cuisson à air chaud.

### Résumé de l'invention

Le problème technique à la base de l'invention consiste donc à fournir un appareil de cuisson électrique de structure simple, compacte et économique, tout en permettant une manipulation aisée et sécurisée d'une cuve de cuisson équipant l'appareil de cuisson électrique.

A cet effet, la présente invention concerne appareil de cuisson électrique comprenant :
- un boîtier comprenant un logement de réception,
- une cuve de cuisson configurée pour être disposée dans le logement de réception et pour recevoir des aliments à cuire,
- un couvercle configuré pour occuper une position d'ouverture dans laquelle le couvercle autorise un accès à la cuve de cuisson, et une position de fermeture dans laquelle le couvercle empêche l'accès à la cuve de cuisson et délimite, avec la cuve de cuisson, une chambre de cuisson,
- un élément de chauffage configuré pour chauffer la cuve de cuisson,
- un système de cuisson à air chaud configuré pour générer un flux d'air chaud sur des aliments reçus dans la cuve de cuisson, le système de cuisson à air chaud comprenant un ventilateur relié mécaniquement au couvercle et configuré pour générer un flux d'air sur des aliments reçus dans la cuve de cuisson, une unité d'entraînement configurée pour entraîner en rotation le ventilateur autour d'un axe de rotation, et un dispositif de chauffage relié mécaniquement au couvercle et configuré pour chauffer le flux d'air généré par le ventilateur, et
- une unité de commande configurée pour commander le fonctionnement de l'appareil de cuisson électrique selon au moins un mode de cuisson à air chaud,
la cuve de cuisson comportant au moins une poignée de préhension configurée pour être accessible depuis l'extérieur de la chambre de cuisson lorsque la cuve de cuisson est disposée dans le logement de réception et que le couvercle est dans la position de fermeture, et l'appareil de cuisson électrique comporte un dispositif de barrage fixé au couvercle et configuré pour limiter, et par exemple pour empêcher, un écoulement du flux d'air chaud, généré par le système de cuisson à air chaud, au contact de l'au moins une poignée de préhension, c'est-à-dire sur l'au moins une poignée de préhension, lorsque le couvercle est dans la position de fermeture et que l'appareil de cuisson électrique est dans le mode de cuisson à air chaud.

En d'autres termes, le dispositif de barrage est configuré pour limiter une communication fluidique entre la chambre de cuisson et l'au moins une poignée de préhension, et par exemple pour isoler fluidiquement la chambre de cuisson et l'au moins une poignée de préhension, lorsque le couvercle est dans la position de fermeture et que l'appareil de cuisson électrique est dans le mode de cuisson à air chaud.

Une telle configuration de l'appareil de cuisson électrique permet de réaliser la cuisson des aliments reçus dans la cuve de cuisson, puis de retirer aisément la cuve de cuisson hors du boîtier au moyen de l'au moins une poignée de préhension. La présence du dispositif de barrage permet alors de maintenir l'au moins une poignée de préhension à une température modérée de telle sorte que la manipulation de la cuve de cuisson par un utilisateur, après un cycle de cuisson à air chaud par exemple, ne présente aucun risque de brûlure. Avantageusement, une telle configuration de l'appareil de cuisson électrique selon l'invention permet d'utiliser directement la cuve de cuisson afin de réaliser un service à table par exemple.

L'appareil de cuisson électrique peut en outre présenter une ou plusieurs des caractéristiques suivantes, prises seules ou en combinaison.

Selon un mode de réalisation de l'invention, le dispositif de barrage est un dispositif d'étanchéité, tel qu'un joint d'étanchéité par exemple.

Selon un mode de réalisation de l'invention, l'unité de commande est en outre configurée pour commander le fonctionnement de l'appareil de cuisson électrique selon un mode de cuisson conductif, tel qu'un mode de cuisson sous pression et/ou un mode de cuisson à vapeur.

Selon un mode de réalisation de l'invention, la chambre de cuisson est configurée pour délimiter un espace fermé étanche lorsque l'appareil de cuisson électrique est dans un mode de cuisson conductif.

Lors de l'utilisation de l'appareil de cuisson électrique dans le mode de cuisson sous pression, la pression va augmenter durant une première phase de cuisson jusqu'à atteindre une valeur seuil avant d'être régulée mécaniquement par un organe de régulation, tel qu'une soupape de décharge par exemple.

Selon un mode de réalisation de l'invention, le boîtier comprend une contre-cuve délimitant le logement de réception.

Selon un mode de réalisation de l'invention, l'au moins une poignée de préhension s'étend sensiblement radialement depuis une portion périphérique supérieure de la cuve de cuisson.

Selon un mode de réalisation de l'invention, la cuve de cuisson comporte un corps de cuve et l'au moins une poignée de préhension est solidaire avec le corps de cuve.

Selon un autre mode de réalisation de l'invention, l'au moins une poignée de préhension s'étend sensiblement radialement depuis une paroi externe de la cuve de cuisson.

Selon un mode de réalisation de l'invention, l'axe de rotation est sensiblement vertical lorsque l'appareil de cuisson électrique repose sur une surface horizontale.

Selon un mode de réalisation de l'invention, la cuve de cuisson comporte deux poignées de préhension qui sont sensiblement diamétralement opposées par rapport à un axe central de la cuve de cuisson.

Selon un mode de réalisation de l'invention, le couvercle est monté mobile en pivotement autour d'un axe de pivotement qui est sensiblement horizontal lorsque le boîtier repose sur une surface horizontale.

Selon un mode de réalisation de l'invention, le dispositif de barrage est configuré pour être interposé entre la chambre de cuisson et l'au moins une poignée de préhension et pour faire barrière au flux d'air chaud généré par le système de cuisson à air chaud, lorsque le couvercle est dans la position de fermeture et que l'appareil de cuisson électrique est dans le mode de cuisson à air chaud.

Selon un mode de réalisation de l'invention, le dispositif de barrage est annulaire et est configuré pour coopérer de manière étanche avec un bord périphérique supérieur de la cuve de cuisson lorsque le couvercle est dans la position de fermeture.

Selon un mode de réalisation de l'invention, le dispositif de barrage est configuré pour reposer sur le bord périphérique supérieur de la cuve de cuisson lorsque le couvercle est dans la position de fermeture.

Selon un mode de réalisation de l'invention, la cuve de cuisson comporte une ouverture d'accès qui est délimitée par le bord périphérique supérieur de la cuve de cuisson et qui est configurée pour autoriser l'introduction des aliments dans la cuve de cuisson lorsque le couvercle est dans la position d'ouverture.

Selon un mode de réalisation de l'invention, le dispositif de barrage est configuré pour s'étendre sensiblement au niveau de l'ouverture d'accès de la cuve de cuisson lorsque le couvercle est dans la position de fermeture.

Selon un mode de réalisation de l'invention, le dispositif de barrage est configuré de telle sorte que, lorsque l'appareil de cuisson électriques est dans le mode de cuisson conductif, et en particulier dans le mode de cuisson sous pression, la surface de contact, qui est définie par la jonction entre le dispositif de barrage et la cuve de cuisson, augmente au fur et à mesure de l'augmentation de pression à l'intérieur de la chambre de cuisson. Une telle configuration de l'appareil de cuisson électrique assure une fermeture étanche de la chambre de cuisson au niveau du dispositif de barrage lors de l'utilisation de l'appareil de cuisson électrique dans le mode de cuisson conductif.

Selon un mode de réalisation de l'invention, le dispositif de barrage comporte une lèvre d'étanchéité présentant une section transversale en forme de V. Une telle configuration de l'appareil de cuisson électrique permet d'assurer l'étanchéité au niveau du dispositif de barrage lors de l'utilisation de l'appareil de cuisson électrique dans le mode de cuisson à air chaud mais également dans le mode de cuisson conductif.

Selon un mode de réalisation de l'invention, l'axe de rotation du ventilateur est sensiblement coaxial avec l'axe central de la cuve de cuisson.

Selon un mode de réalisation de l'invention, l'appareil de cuisson électrique comporte une interface utilisateur configurée pour permettre à un utilisateur de sélectionner au moins un programme de cuisson.

Selon un mode de réalisation de l'invention, l'appareil de cuisson électrique comporte un organe de verrouillage, tel qu'une bague de verrouillage par exemple, déplaçable au moins entre une position de verrouillage dans laquelle l'organe de verrouillage verrouille le couvercle dans la position de fermeture, et une position de déverrouillage dans laquelle le couvercle est déplaçable entre la position d'ouverture et la position de fermeture.

Selon un mode de réalisation de l'invention, l'organe de verrouillage délimite au moins en partie au moins un passage de poignée configuré pour autoriser un passage de l'au moins une poignée de préhension lorsque la cuve de cuisson est positionnée dans le logement de réception, que le couvercle est dans la position de fermeture et que l'organe de verrouillage est dans la position de verrouillage.

Selon un mode de réalisation de l'invention, l'organe de verrouillage est monté mobile en rotation par rapport au couvercle autour d'un axe de verrouillage.

Selon un mode de réalisation de l'invention, l'organe de verrouillage est annulaire et est mobile en rotation entre la position de déverrouillage et la position de verrouillage

Selon un mode de réalisation de l'invention, l'axe de rotation du ventilateur est sensiblement coaxial avec l'axe de verrouillage de l'organe de verrouillage.

Selon un mode de réalisation de l'invention, l'au moins un passage de poignée est au moins en partie formé par une échancrure de passage prévue sur l'organe de verrouillage, l'au moins une poignée de préhension étant configurée pour faire saillie radialement à travers l'au moins une échancrure de passage.

Selon un mode de réalisation de l'invention, l'organe de verrouillage est configuré pour verrouiller le couvercle sur le boîtier, et par exemple sur la contre-cuve, lorsque l'organe de verrouillage occupe la position de verrouillage.

Selon un mode de réalisation de l'invention, l'au moins un passage de poignée est au moins en partie formé par une échancrure de passage prévue sur l'organe de verrouillage, et par exemple sur une paroi périphérique de l'organe de verrouillage, l'au moins une poignée de préhension étant configurée pour faire saillie radialement à travers l'au moins une échancrure de passage.

Selon un mode de réalisation de l'invention, l'au moins une échancrure de passage débouche dans un bord inférieur de l'organe de verrouillage, et par exemple dans un bord inférieur de la paroi périphérique.

Selon un mode de réalisation de l'invention, l'organe de verrouillage comporte une pluralité d'organes de maintien configurés pour coopérer avec une pluralité d'éléments de maintien prévus sur le boîtier lorsque l'organe de verrouillage occupe la position de verrouillage et que le couvercle occupe le positon de fermeture, de manière à verrouiller le couvercle dans la position de fermeture.

Selon un mode de réalisation de l'invention, l'au moins un passage de poignée est délimité latéralement par deux organes de maintien appartenant à la pluralité d'organes de maintien et configurés pour être situés immédiatement de part et d'autre de l'au moins une poignée de préhension lorsque le couvercle occupe la position de fermeture.

Selon un mode de réalisation de l'invention, les deux organes de maintien délimitant l'au moins un passage de poignée sont situés à distance de l'au moins une poignée de préhension lorsque l'organe de verrouillage évolue entre la position de verrouillage et la position de déverrouillage.

Selon un mode de réalisation de l'invention, l'au moins une poignée de préhension comprend une zone de préhension et un support de poignée configuré pour relier la zone de préhension à un corps de cuve de la cuve de cuisson, le support de poignée étant désaxé par rapport à la zone de préhension.

Selon un mode de réalisation de l'invention, l'au moins une poignée de préhension présente une largeur de poignée et l'au moins un passage de poignée présente une largeur de passage qui est strictement supérieure à la largeur de poignée. Une telle configuration de l'invention permet le passage de l'organe de verrouillage entre la position de verrouillage et la position de fermeture par un pivotement de l'organe de verrouillage autour de l'axe de verrouillage. En d'autres termes, la largeur d'échancrure est supérieure ou égale à la somme de la largeur de poignée et de la course de déplacement angulaire de l'organe de verrouillage. Une telle configuration de l'invention permet un déplacement de l'organe de verrouillage entre la position de verrouillage et la position de fermeture.

Selon un autre mode de réalisation de l'invention, l'organe de verrouillage est configuré pour verrouiller le couvercle sur la cuve de cuisson lorsque l'organe de verrouillage occupe la position de verrouillage.

Selon un mode de réalisation de l'invention, la pluralité d'organes de maintien et la pluralité d'éléments de maintien sont configurés pour fixer de manière amovible, c'est-à-dire de manière temporaire et réversible, le couvercle et le boîtier.

Selon un mode de réalisation de l'invention, l'organe de verrouillage est configuré pour assurer une compression du dispositif de barrage lorsque le couvercle est dans la position de fermeture et que l'organe de verrouillage est dans la position de verrouillage. Une telle configuration de l'organe de verrouillage permet d'améliorer encore l'efficacité du dispositif de barrage, et donc de limiter encore les risques de fuite de fluide au niveau du dispositif de barrage.

Selon un mode de réalisation de l'invention, l'appareil de cuisson électrique comporte un couvercle intérieur configuré pour occuper une position d'obturation dans laquelle le couvercle intérieur repose sur la cuve de cuisson et délimite avec la cuve de cuisson la chambre de cuisson, et une position de retrait dans laquelle le couvercle intérieur est dissocié du boîtier et autorise un accès à la cuve de cuisson lorsque le couvercle est dans la position d'ouverture.

Selon un mode de réalisation de l'invention, le couvercle intérieur est configuré pour être interposé entre le couvercle et la cuve de cuisson lorsque le couvercle occupe la position de fermeture et que le couvercle intérieur est dans la position d'obturation. La présence du couvercle intérieur permet de réaliser la cuisson d'aliment dans la cuve de cuisson à une pression supérieure à la pression atmosphérique lorsque le couvercle intérieur est dans la position d'obturation et que l'unité de commande commande un fonctionnement de l'appareil de cuisson électrique selon le mode de cuisson conductif.

Selon un mode de réalisation de l'invention, le couvercle intérieur est amovible.

Selon un mode de réalisation de l'invention, le dispositif de barrage est configuré pour s'étendre entre le couvercle et le couvercle intérieur lorsque le couvercle intérieur occupe la position d'obturation.

Selon un mode de réalisation de l'invention, le couvercle intérieur comporte au moins une poignée de couvercle configurée pour être accessible depuis l'extérieur de l'appareil de cuisson électrique lorsque le couvercle intérieur est dans la position d'obturation.

Selon un mode de réalisation de l'invention, le couvercle intérieur comporte exactement deux poignées de couvercle sont symétriques par rapport à un point de symétrie. De façon avantageuse, ledit point de symétrie coïncide avec un axe central du couvercle intérieur.

Selon un mode de réalisation de l'invention, l'au moins une poignée de couvercle comprend une zone de préhension de couvercle et un support de poignée de couvercle configuré pour relier la zone de préhension de couvercle à une partie centrale du couvercle intérieur, le support de poignée de couvercle étant désaxé par rapport à la zone de préhension de couvercle.

Selon un mode de réalisation de l'invention, le support de poignée de couvercle définit un dégagement configuré pour autoriser le passage de l'organe de verrouillage. Une telle configuration de l'invention permet de limiter la largeur de l'au moins un passage de poignée.

Selon un mode de réalisation de l'invention, l'unité de commande est configurée pour activer l'élément de chauffage lorsque l'appareil de cuisson électrique est dans le mode de cuisson conductif

Selon un mode de réalisation de l'invention, l'appareil de cuisson électrique comporte une interface utilisateur configurée pour permettre à un utilisateur de sélectionner au moins un programme de cuisson.

Selon un mode de réalisation de l'invention, le dispositif de barrage est fixé à la cuve de cuisson.

Selon un mode de réalisation de l'invention, le dispositif de barrage est configuré pour s'étendre sur le pourtour d'une face extérieure de la cuve de cuisson.

Selon un mode de réalisation de l'invention, le dispositif de barrage est prévu à proximité du bord périphérique supérieur de la cuve de cuisson.

Selon un mode de réalisation de l'invention, le dispositif de barrage est configuré pour coopérer avec une paroi interne de l'organe de verrouillage lorsque le couvercle est dans la position de fermeture.

### Brève description des figures

La présente invention sera bien comprise à l'aide de la description qui suit en référence aux figures annexées, dans lesquelles des signes de références identiques correspondent à des éléments structurellement et / ou fonctionnellement identiques ou similaires.
[Fig 1] est une vue schématique en coupe d'un appareil de cuisson électrique comprenant des poignées de préhension et un dispositif de barrage selon un premier mode de réalisation de l'invention ;
[Fig 2] est une vue schématique du dessus de l'appareil de cuisson électrique de la figure 1 comportant un couvercle dans une position d'ouverture ;
[Fig 3] est une vue en perspective de côté de l'appareil de cuisson électrique de la figure 1 comprenant un organe de verrouillage dans une position de verrouillage ;
[Fig 4] est une vue en perspective de côté de l'appareil de cuisson électrique de la figure 1 dans lequel l'organe de verrouillage est dans une position de déverrouillage ;
[Fig 5] est une vue partielle, en coupe longitudinale, de l'appareil de cuisson électrique selon le premier mode de réalisation de l'invention ;
[Fig 6] est une vue partielle, en coupe longitudinale, de l'appareil de cuisson électrique de la figure 5 dans lequel un couvercle intérieur est présent ;
[Fig 7] est une vue en perspective de côté d'un appareil de cuisson électrique selon un deuxième mode de réalisation de l'invention ;
[Fig 8] est une vue partielle, en coupe longitudinale, d'un appareil de cuisson électrique selon un troisième mode de réalisation de l'invention ;
[Fig 9] est une vue partielle, en coupe longitudinale, de l'appareil de cuisson électrique de la figure 8 dans lequel le couvercle intérieur est présent.

### Description détaillée

Dans le présent document, les termes « avant », « supérieur », « inférieur » et « haut » sont définis par rapport à une utilisation normale de l'appareil de cuisson électrique durant laquelle le boîtier repose sur une surface horizontale.

A défaut de stipulation contraire, le terme « sensiblement » signifie, dans le présent document, « exactement ou à 10% ou à 10° près ».

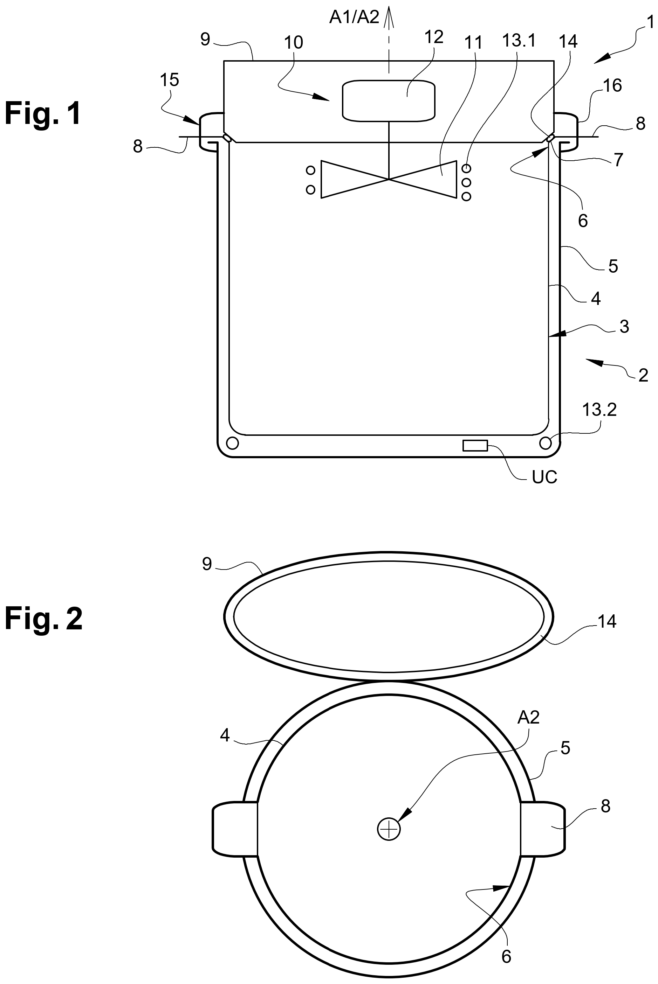

Les figures 1 à 6 représentent tout ou partie d'un appareil de cuisson électrique 1, tel qu'un autocuiseur électrique ou un multi-cuiseur électrique, selon un premier mode de réalisation de l'invention. L'appareil de cuisson électrique 1 est configuré pour la cuisson d'aliments, tels que de la viande, du poisson, des légumes ou autres, et comporte une unité de commande UC configurée pour commander un fonctionnement de l'appareil de cuisson électrique 1 selon au moins un mode de cuisson à air chaud et un mode de cuisson conductif, tel qu'un mode de cuisson sous pression et/ou un mode de cuisson à vapeur, et dont le fonctionnement sera détaillé ci-après.

L'appareil de cuisson électrique 1 comporte un boîtier 2 comprenant un logement de réception 3, et une cuve de cuisson 4 configurée pour être disposée de manière amovible dans le logement de réception 3 et pour recevoir des aliments à cuire. Le boîtier 2 comporte en outre une contre-cuve 5 qui délimite le logement de réception 3.

La cuve de cuisson 4 comporte une ouverture d'accès 6 délimitée par un bord périphérique supérieur 7 de la cuve de cuisson 4, à travers laquelle des aliments peuvent être introduits dans la cuve de cuisson 4. La cuve de cuisson 4 comporte en outre au moins une poignée de préhension 8, qui s'étend sensiblement radialement depuis le bord périphérique supérieur 7, et configurée pour être accessible depuis l'extérieur du boîtier 2. Selon le mode de réalisation de l'invention représenté sur les figures 1 à 6, la cuve de cuisson 4 comporte deux poignées de préhension 8 qui sont sensiblement diamétralement opposées par rapport à un axe central de la cuve de cuisson 4, et qui sont situées à proximité du bord périphérique supérieur 7 de la cuve de cuisson 4. Selon le mode de réalisation de l'invention, l'axe de rotation A1 du ventilateur 11 est sensiblement coaxial avec l'axe central de la cuve de cuisson 4.

Plus particulièrement, la cuve de cuisson 4 comporte un corps de cuve et chaque poignée de préhension 8 est solidaire avec le corps de cuve. Selon un autre mode de réalisation de l'invention non représenté sur les figures, l'au moins une poignée de préhension 8 pourrait s'étendre sensiblement radialement depuis une paroi externe de la cuve de cuisson 4. Dans le présent document, le terme « radialement » est défini par rapport à l'axe central de la cuve de cuisson 4.

L'appareil de cuisson électrique 1 comporte de plus un couvercle 9, monté mobile en pivotement autour d'un axe de pivotement qui est sensiblement horizontal lorsque le boîtier 2 repose sur une surface horizontale. Le couvercle 9 est configuré pour occuper une position d'ouverture (voir la figure 2) dans laquelle le couvercle 9 autorise un accès à la cuve de cuisson 4, et une position de fermeture (voir la figure 1) dans laquelle le couvercle 9 empêche l'accès à la cuve de cuisson 4 et délimite, avec la cuve de cuisson 4, une chambre de cuisson.

L'appareil de cuisson électrique 1 comporte en outre un système de cuisson à air chaud 10 disposé au moins en partie dans le couvercle 9 et configuré pour générer un flux d'air chaud sur des aliments reçus dans la cuve de cuisson 4 lorsque l'appareil de cuisson électrique 1 est dans le mode de cuisson à air chaud.

Le système de cuisson à air chaud 10 comprend un ventilateur 11 relié mécaniquement au couvercle 9 et configuré pour générer un flux d'air sur des aliments reçus dans la cuve de cuisson 4, une unité d'entraînement 12 configurée pour entraîner en rotation le ventilateur 11 autour d'un axe de rotation A1 sensiblement vertical lorsque l'appareil de cuisson électrique 1 repose sur une surface horizontale, et un dispositif de chauffage 13.1, comportant une résistance électrique chauffante, relié mécaniquement au couvercle 9 et configuré pour chauffer le flux d'air généré par le ventilateur 11. De façon avantageuse, le ventilateur 11 et le dispositif de chauffage 13.1 sont respectivement configurés pour s'étendre au moins en partie en regard de la cuve de cuisson 4, et plus particulièrement en regard de l'ouverture d'accès 6, lorsque le couvercle 9 est dans la position de fermeture.

L'appareil de cuisson électrique 1 comporte par ailleurs un élément de chauffage 13.2 configuré pour chauffer la cuve de cuisson 4. L'unité de commande UC est en particulier configurée pour activer l'élément de chauffage 13.2 lorsque l'appareil de cuisson électrique 1 est dans le mode de cuisson sous pression.

L'appareil de cuisson électrique 1 comporte en outre un dispositif de barrage 14 (visible sur les figures1, 2, 5 et 6), tel qu'un joint d'étanchéité par exemple, qui est fixé au couvercle 9 et qui repose sur le bord périphérique supérieur de la cuve de cuisson 4 lorsque le couvercle 9 est dans la position de fermeture, le dispositif de barrage 14 étant configuré pour être interposé entre la chambre de cuisson et chaque poignée de préhension 8.

Plus particulièrement, le dispositif de barrage 14 est configuré pour s'étendre sensiblement au niveau de l'ouverture d'accès 6 de la cuve de cuisson 4 lorsque le couvercle 9 est dans la position de fermeture et est configuré pour limiter, et par exemple pour empêcher, un écoulement du flux d'air chaud, généré par le système de cuisson à air chaud 10, au contact des poignées de préhension 8 lorsque le couvercle 9 est dans la position de fermeture et que l'appareil de cuisson électrique 1 est dans le mode de cuisson à air chaud.

La présence du dispositif de barrage 14 permet en outre de maintenir les poignées de préhension 8 à une température modérée de telle sorte que la manipulation par un utilisateur, après un cycle de cuisson à air chaud par exemple, ne présente pas de risque de brulure. En d'autres termes, le dispositif de barrage 14 est configuré pour limiter une communication fluidique entre la chambre de cuisson et l'au moins une poignée de préhension 8, et par exemple pour isoler fluidiquement la chambre de cuisson et l'au moins une poignée de préhension 8, lorsque le couvercle 9 est dans la position de fermeture et que l'appareil de cuisson électrique 1 est dans le mode de cuisson à air chaud.

Une telle configuration de l'appareil de cuisson électrique 1 permet de réaliser la cuisson des aliments reçus dans la cuve de cuisson 4, puis de retirer aisément la cuve de cuisson 4 hors du boîtier au moyen de l'au moins une poignée de préhension 8.

Selon le premier mode de réalisation de l'invention, le dispositif de barrage 14 est annulaire et est configuré pour s'étendre sensiblement au niveau de l'ouverture d'accès 6 et pour coopérer avec le bord périphérique supérieur de la cuve de cuisson 4 lorsque le couvercle 9 est dans la position de fermeture. Le dispositif de barrage 14 comprend une lèvre d'étanchéité présentant une section transversale en forme de V.

Le dispositif de barrage 14 est configuré de telle sorte que, lorsque l'appareil de cuisson électrique 1 est dans le mode de cuisson conductif, et plus particulièrement dans le mode de cuisson sous pression, la surface de contact, qui est définie par la jonction entre le dispositif de barrage 14 et la cuve de cuisson 4, augmente au fur et à mesure de l'augmentation de pression à l'intérieur de la chambre de cuisson. Une telle configuration de l'appareil de cuisson électrique 1 permet d'assurer une étanchéité au niveau du dispositif de barrage 14 lors de l'utilisation de l'appareil de cuisson électrique 1 dans le mode de cuisson à air chaud mais également dans le mode de cuisson conductif.

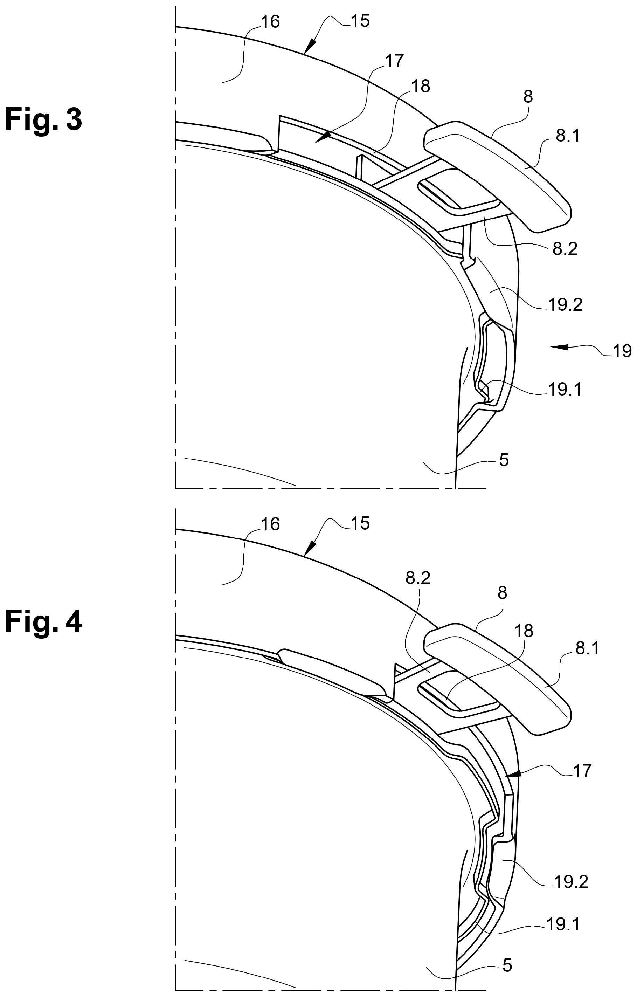

L'appareil de cuisson électrique 1 comporte également un organe de verrouillage 15, tel qu'une bague de verrouillage par exemple, qui est déplaçable entre une position de verrouillage dans laquelle l'organe de verrouillage 15 verrouille le couvercle 9 dans la position de fermeture (voir la figure 3) sur le boîtier 2, et par exemple sur la contre-cuve 5, et une position de déverrouillage dans laquelle l'organe de verrouillage 15 libère le couvercle 9 et autorise un déplacement du couvercle 9 entre la position d'ouverture et la position de fermeture (voir la figure 4). Plus particulièrement, l'organe de verrouillage 15 est monté mobile en rotation entre la position de déverrouillage et la position de verrouillage par rapport au couvercle 9 autour d'un axe de verrouillage A2 qui est sensiblement vertical lorsque le boîtier 2 repose sur une surface horizontale. En outre, l'organe de verrouillage 15 est solidaire en pivotement avec le couvercle 9 autour de l'axe de pivotement. De façon avantageuse, l'axe de verrouillage A2 est sensiblement coaxial avec un axe central du couvercle 9 et avec l'axe de rotation A1 du ventilateur 11.

Comme représenté plus spécifiquement sur les figures 3 et 4, l'organe de verrouillage 15 est sensiblement annulaire et est centré sur l'axe de verrouillage A2.

L'organe de verrouillage 15 comporte notamment une paroi périphérique 16 qui est sensiblement cylindrique et qui s'étend autour de l'axe de verrouillage A2.

L'organe de verrouillage 15 délimite au moins en partie au moins un passage de poignée 17 configuré pour autoriser un passage d'une poignée de préhension 8 respective appartenant à la cuve de cuisson 4 lorsque la cuve de cuisson 4 est positionnée dans le logement de réception 3, que le couvercle 9 est dans la position de fermeture et que l'organe de verrouillage 15 est déplacé entre la position de verrouillage et la position de déverrouillage. De façon avantageuse, l'organe de verrouillage 15 délimite au moins en partie deux passages de poignée 17 qui sont diamétralement opposés par rapport à l'axe de verrouillage A2 et qui sont configurés pour autoriser chacun le passage d'une poignée de préhension 8 respective.

Selon le premier mode de réalisation de l'invention, le ou chaque passage de poignée 17 est formé par une échancrure de passage 18 qui débouche dans un bord inférieur de l'organe de verrouillage 15, et plus particulièrement dans un bord inférieur de la paroi périphérique 16 de l'organe de verrouillage 15. Chaque échancrure de passage 18 est configurée pour autoriser la poignée de préhension 8 respective à faire saillie radialement à travers ladite échancrure de passage 18. La ou chaque poignée de préhension 8 est plus particulièrement configurée pour faire saillie radialement au-delà du boîtier 2 et de l'organe de verrouillage 15 et pour être accessible depuis l'extérieur de l'appareil de cuisson électrique 1 lorsque la cuve de cuisson 4 est reçue dans le logement de réception 3.

Une telle configuration de l'appareil de cuisson électrique 1 permet de réaliser la cuisson des aliments dans la cuve de cuisson 4, puis de manipuler la cuve de cuisson 4 au moyen de la ou des poignée(s) de préhension 8 de telle sorte qu'un utilisateur peut réaliser un service à table directement à partir de la cuve de cuisson 4 lorsque la phase de cuisson dans l'appareil de cuisson électrique 1 est terminée. En outre, la présence des passages de poignée 17 sur l'organe de verrouillage 15 permet d'autoriser le passage des poignées de préhension 8 lorsque le couvercle 9 est dans la position de fermeture et que l'organe de verrouillage 15 est dans la position de verrouillage.

Selon le premier mode de réalisation de l'invention, la ou chaque poignée de préhension 8 comporte une zone de préhension 8.1 et un support de poignée 8.2 configuré pour relier la zone de préhension 8.1 au corps de cuve de la cuve de cuisson, le support de poignée 8.2 et la zone de préhension 8.1 s'étendant sensiblement sur un même axe d'extension qui est sensiblement transversal à l'axe de rotation A1. En outre, le ou chaque passage de poignée 17 présente une largeur de passage qui est strictement supérieure à la somme de la largeur du support de poignée 8.2 respectif et de la course de déplacement angulaire de l'organe de verrouillage 15 entre la position de verrouillage et la position de déverrouillage. Une telle configuration de l'invention permet le passage de l'organe de verrouillage 15 entre la position de verrouillage et la position de fermeture par une rotation de l'organe de verrouillage 15 autour de l'axe de verrouillage A2, sans risque de conflit avec la ou les poignées de préhension 8.

L'appareil de cuisson électrique 1 comporte une pluralité d'éléments de maintien 19.1 prévus sur le boîtier et configurés pour coopérer avec une pluralité d'organes de maintien 19.2 prévus sur l'organe de verrouillage 15 lorsque l'organe de verrouillage 15 occupe la position de verrouillage et que le couvercle 9 occupe le positon de fermeture, de manière à verrouiller le couvercle 9 dans la position de fermeture.

La pluralité d'éléments de maintien 19.1 et la pluralité d'organes de maintien 19.2 sont configurées de telle sorte que, lorsque l'organe de verrouillage 15 occupe la position de déverrouillage, les organes de maintien 19.2 et les éléments de maintien 19.1 sont décalés angulairement par rapport à l'axe de verrouillage A2 de manière à autoriser un déplacement du couvercle 9 depuis la position de fermeture vers la position d'ouverture, et de telle sorte que, lorsque l'organe de verrouillage 15 occupe la position de verrouillage, les organes de maintien 19.2 et les éléments de maintien 19.1 sont respectivement en vis-à-vis de manière à empêcher un déplacement du couvercle 9 depuis la position de fermeture vers la position d'ouverture.

Selon le premier mode de réalisation de l'invention, chaque élément de maintien 19.1 est configuré pour faire saillie radialement par rapport à l'axe de verrouillage A2 et en direction de l'extérieur de l'appareil de cuisson électrique 1, tandis que chaque organe de maintien 19.2 est configuré pour faire saillie radialement par rapport à l'axe de verrouillage A2 et en direction de l'intérieur de l'appareil de cuisson électrique 1 (voir les figures 3 et 4).

Le ou chaque passage de poignée 17 est délimité latéralement par deux organes de maintien 19.2 appartenant à la pluralité d'organes de maintien 19.2 et configurés pour être situés immédiatement de part et d'autre de la poignée de préhension 8 respective lorsque le couvercle 9 occupe la position de fermeture. Les deux organes de maintien 19.2 délimitant un passage de poignée 17 sont situés à distance de la poignée de préhension 8 respective lorsque l'organe de verrouillage 15 évolue entre la position de verrouillage et la position de déverrouillage.

L'appareil de cuisson électrique 1 peut, en outre, comporter une interface utilisateur, laquelle est avantageusement prévue sur une partie avant de l'appareil de cuisson électrique 1, et configurée pour permettre à un utilisateur de sélectionner un programme de cuisson, et notamment le mode de cuisson à air chaud ou le mode de cuisson conductif.

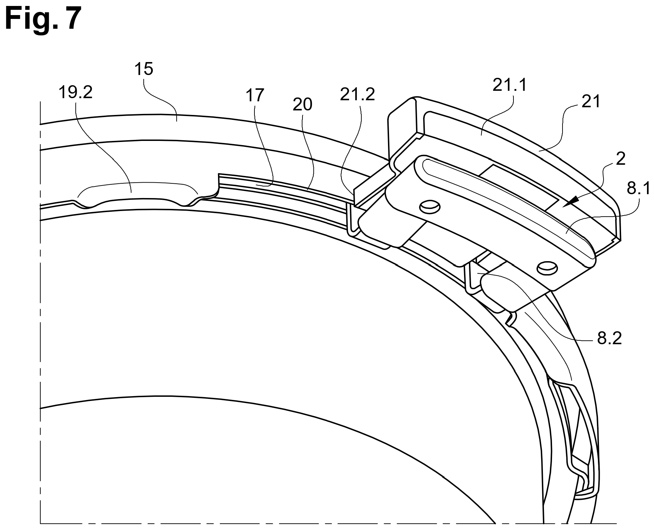

La figure 7 représente un appareil de cuisson électrique 1 selon un deuxième mode de réalisation de l'invention qui diffère du premier mode de réalisation essentiellement en ce que le support de poignée 8.2 est désaxé par rapport à la zone de préhension 8.1. Une telle configuration de l'invention permet avantageusement que la ou les poignées de préhension 8 passent en dessous de l'organe de verrouillage 15, ce qui évite d'usiner, ou tout du moins de limiter l'usinage de la paroi périphérique 16 de l'organe de verrouillage 15 afin de ménager le ou les passages de poignée 17. Aussi, le support de poignée 8.2 définit un dégagement configuré pour autoriser le passage de l'organe de verrouillage 15.

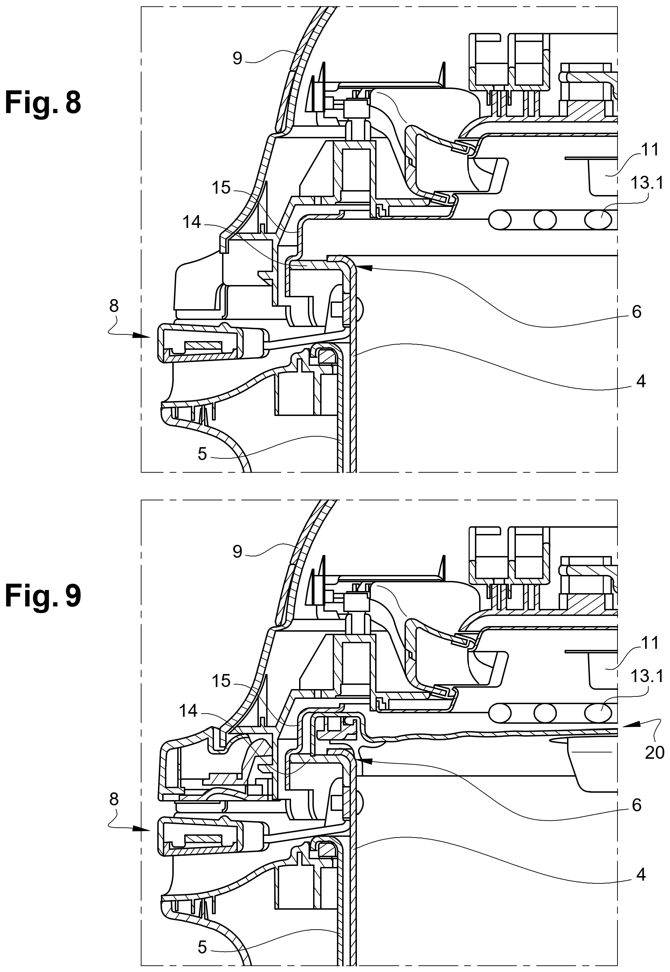

Les figures 8 et 9 représentent un appareil de cuisson électrique 1 selon un troisième mode de réalisation de l'invention qui diffère du premier mode de réalisation essentiellement en ce que le dispositif de barrage 14 est fixé à la cuve de cuisson 4 et est configuré pour s'étendre sur le pourtour d'une face extérieure de la cuve de cuisson 4. Plus particulièrement, le dispositif de barrage 14 est prévu à proximité du bord périphérique supérieur de la cuve de cuisson 4 et est configuré pour coopérer avec une paroi interne de l'organe de verrouillage 15 lorsque le couvercle 9 est dans la position de fermeture.

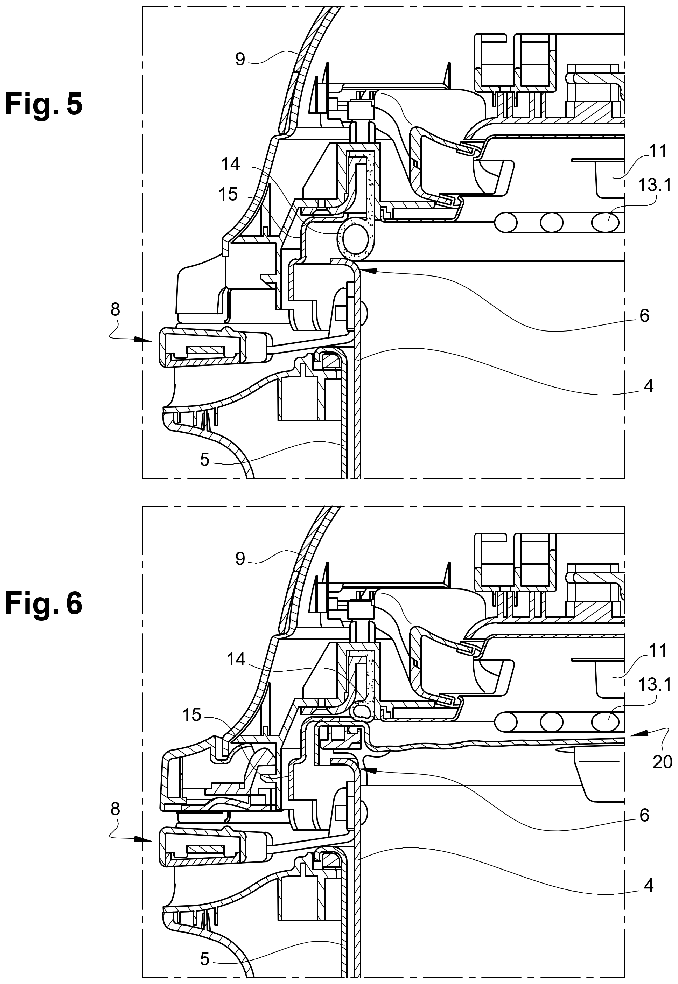

En outre, et indépendamment du mode de réalisation de l'invention, l'appareil de cuisson électrique 1 peut comporter un couvercle intérieur 20 (voir figures 6, 7 et 9) configuré pour occuper une position d'obturation dans laquelle le couvercle intérieur 20 repose sur la cuve de cuisson 4 et délimite avec la cuve de cuisson 4 la chambre de cuisson, et une position de retrait dans laquelle le couvercle intérieur 20 est dissocié du boîtier 2 et autorise un accès à la cuve de cuisson 4 lorsque le couvercle 9 est dans la position d'ouverture. Le couvercle intérieur 20 est utilisé dans le mode de cuisson conductif, et plus particulièrement dans le mode de cuisson sous pression, dans le but d'assurer l'étanchéité de la chambre de cuisson.

Le couvercle intérieur 20 est configuré pour être interposé entre le couvercle 9 et la cuve de cuisson 4 lorsque le couvercle 9 occupe la position de fermeture et que le couvercle intérieur 20 est dans la position d'obturation. Selon le premier mode de réalisation de l'invention, le dispositif de barrage 14 est configuré pour s'étendre entre le couvercle 9 et le couvercle intérieur 20 lorsque le couvercle intérieur 20 occupe la position d'obturation, ce qui diffère du troisième mode de réalisation de l'invention dans lequel le dispositif de barrage 14 est configuré pour s'étendre entre la cuve de cuisson 4 et l'organe de verrouillage 15 même en présence du couvercle intérieur 20 (voir figure 6).

La présence du couvercle intérieur 20 permet de réaliser la cuisson d'aliment dans la cuve de cuisson 4 à une pression supérieure à la pression atmosphérique lorsque le couvercle intérieur 20 est dans la position d'obturation, que l'organe de verrouillage 15 est dans la position de verrouillage, et que l'unité de commande UC commande le fonctionnement de l'appareil de cuisson électrique 1 selon le mode de cuisson sous pression.

Avantageusement, le couvercle intérieur 20 comporte au moins une poignée de couvercle 21 configurée pour être accessible depuis l'extérieur de l'appareil de cuisson électrique 1 lorsque le couvercle intérieur 20 est dans la position d'obturation. En outre, la ou chaque poignée de couvercle 21 est configurée pour être située en regard d'une poignée de préhension 8 respective.

La ou chaque poignée de couvercle 21 comprend une zone de préhension de couvercle 21.1 et un support de poignée de couvercle 21.2 configuré pour relier la zone de préhension de couvercle 21.1 à une partie centrale du couvercle intérieur 20, le support de poignée de couvercle 21.2 étant désaxé par rapport à la zone de préhension de couvercle 21.1. Par ailleurs, le support de poignée de couvercle 21.2 définit un dégagement configuré pour autoriser le passage de l'organe de verrouillage 15. Une telle configuration de l'invention permet de limiter la largeur de l'au moins un passage de poignée 17.

Dans une telle configuration de l'appareil de cuisson électrique 1, le ou chaque passage de poignée 17 est configuré pour autoriser un passage de la poignée de couvercle 21 respective lorsque le couvercle 9 est dans la position de fermeture et que l'organe de verrouillage 15 est dans la position de verrouillage.

Selon le deuxième mode de réalisation de l'invention, le couvercle intérieur 20 comporte exactement deux poignées de couvercle 21 qui sont symétriques par rapport à un point de symétrie, ledit point de symétrie coïncidant avec un axe central du couvercle intérieur 20 par exemple.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

## Revendications

1. Appareil de cuisson électrique (1) comprenant :
- un boîtier (2) comprenant un logement de réception (3),
- une cuve de cuisson (4) configurée pour être disposée dans le logement de réception (3) et pour recevoir des aliments à cuire,
- un couvercle (9) configuré pour occuper une position d'ouverture dans laquelle le couvercle (9) autorise un accès à la cuve de cuisson (4), et une position de fermeture dans laquelle le couvercle (9) empêche l'accès à la cuve de cuisson (4) et délimite, avec la cuve de cuisson (4), une chambre de cuisson,
- un élément de chauffage (13.2) configuré pour chauffer la cuve de cuisson (4),
- un système de cuisson à air chaud (10) configuré pour générer un flux d'air chaud sur des aliments reçus dans la cuve de cuisson (4), le système de cuisson à air chaud (10) comprenant un ventilateur (11) relié mécaniquement au couvercle (9) et configuré pour générer un flux d'air sur des aliments reçus dans la cuve de cuisson (4), une unité d'entraînement (12) configurée pour entraîner en rotation le ventilateur (11) autour d'un axe de rotation (A1), et un dispositif de chauffage (13.1) relié mécaniquement au couvercle (9) et configuré pour chauffer le flux d'air généré par le ventilateur (11), et
- une unité de commande (UC) configurée pour commander le fonctionnement de l'appareil de cuisson électrique (1) selon au moins un mode de cuisson à air chaud, **caractérisé en ce que** la cuve de cuisson (4) comporte au moins une poignée de préhension (8) configurée pour être accessible depuis l'extérieur de la chambre de cuisson lorsque la cuve de cuisson (4) est disposée dans le logement de réception (3) et que le couvercle (9) est dans la position de fermeture, et **en ce que** l'appareil de cuisson électrique (1) comporte un dispositif de barrage (14) fixé au couvercle (9) et configuré pour limiter un écoulement du flux d'air chaud, généré par le système de cuisson à air chaud (10), au contact de l'au moins une poignée de préhension (8) lorsque le couvercle (9) est dans la position de fermeture et que l'appareil de cuisson électrique (1) est dans le mode de cuisson à air chaud.

2. Appareil de cuisson électrique (1) selon la revendication 1, dans lequel l'unité de commande (UC) est en outre configurée pour commander le fonctionnement de l'appareil de cuisson électrique (1) selon un mode de cuisson conductif, tel qu'un mode de cuisson sous pression et/ou un mode de cuisson à vapeur.

3. Appareil de cuisson électrique (1) selon la revendication 1 ou la revendication 2, dans lequel le dispositif de barrage (14) est configuré pour être interposé entre la chambre de cuisson et l'au moins une poignée de préhension (8) et pour faire barrière au flux d'air chaud généré par le système de cuisson à air chaud (10), lorsque le couvercle (9) est dans la position de fermeture et que l'appareil de cuisson électrique (1) est dans le mode de cuisson à air chaud.

4. Appareil de cuisson électrique (1) selon l'une quelconque des revendications 1 à 3, dans lequel le dispositif de barrage (14) est annulaire et est configuré pour coopérer de manière étanche avec un bord périphérique supérieur de la cuve de cuisson (4) lorsque le couvercle (9) est dans la position de fermeture.

5. Appareil de cuisson électrique (1) selon l'une quelconque des revendications 1 à 4, dans lequel le dispositif de barrage (14) comporte une lèvre d'étanchéité présentant une section transversale en forme de V.

6. Appareil de cuisson électrique (1) selon l'une quelconque des revendications 1 à 5, lequel comporte un organe de verrouillage (15) déplaçable au moins entre une position de verrouillage dans laquelle l'organe de verrouillage (15) verrouille le couvercle (9) dans la position de fermeture, et une position de déverrouillage dans laquelle le couvercle (9) est déplaçable entre la position d'ouverture et la position de fermeture.

7. Appareil de cuisson électrique (1) selon la revendication 6, dans lequel l'organe de verrouillage (15) délimite au moins en partie au moins un passage de poignée (17) configuré pour autoriser un passage de l'au moins une poignée de préhension (8) lorsque la cuve de cuisson (4) est positionnée dans le logement de réception, que le couvercle (9) est dans la position de fermeture et que l'organe de verrouillage (15) est dans la position de verrouillage.

8. Appareil de cuisson électrique (1) selon la revendication 7, dans lequel l'au moins un passage de poignée (17) est au moins en partie formé par une échancrure de passage (18) prévue sur l'organe de verrouillage (15), l'au moins une poignée de préhension (8) étant configurée pour faire saillie radialement à travers l'au moins une échancrure de passage (18).

9. Appareil de cuisson électrique (1) selon l'une quelconque des revendications 6 à 8, dans lequel l'organe de verrouillage (15) est monté mobile en rotation par rapport au couvercle (9) autour d'un axe de verrouillage.

10. Appareil de cuisson électrique (1) selon l'une quelconque des revendications 6 à 9, dans lequel l'organe de verrouillage (15) comporte une pluralité d'organes de maintien (19.2) configurés pour coopérer avec une pluralité d'éléments de maintien (19.1) prévus sur le boîtier (2) lorsque l'organe de verrouillage (15) occupe la position de verrouillage et que le couvercle (9) occupe le positon de fermeture, de manière à verrouiller le couvercle (9) dans la position de fermeture.

11. Appareil de cuisson électrique (1) selon l'une quelconque des revendications 6 à 10, dans lequel l'organe de verrouillage (15) est configuré pour assurer une compression du dispositif de barrage (14) lorsque le couvercle (9) est dans la position de fermeture et que l'organe de verrouillage (14) est dans la position de verrouillage.

12. Appareil de cuisson électrique (1) selon l'une quelconque des revendications 1 à 11, lequel comporte un couvercle intérieur (20) configuré pour occuper une position d'obturation dans laquelle le couvercle intérieur (20) repose sur la cuve de cuisson (4) et délimite, avec la cuve de cuisson (4), la chambre de cuisson, et une position de retrait dans laquelle le couvercle intérieur (20) est dissocié du boîtier (2).

13. Appareil de cuisson électrique (1) selon la revendication 12, dans lequel le couvercle intérieur (20) comporte au moins une poignée de couvercle (21) configurée pour être accessible depuis l'extérieur de l'appareil de cuisson électrique lorsque le couvercle intérieur (20) est dans la position d'obturation.
